# FASCICULE DE BREVET EUROPEEN

(11) **EP 2 158 514 B1**
(45) Date de publication et mention de la délivrance du brevet: **23.04.2014**
(21) Numéro de dépôt: 08760231.4
(22) Date de dépôt: 29.05.2008
(51) Int. Cl.: G02B 27/06, G02B 27/22, G09F 11/29, G09F 19/14

(54) **PANNEAU D'AFFICHAGE ET SON PROCÉDÉ DE FABRICATION**
ANZEIGETAFEL UND DESSEN HERSTELLUNGSVERFAHREN
DISPLAY PANEL AND ITS MANUFACTURING METHOD

(30) Priorité: 29.05.2007 FR 0755317; 19.06.2007 FR 0755871; 13.02.2008 FR 0850929
(43) Date de publication de la demande: 03.03.2010
(73) Titulaire: Digital Packaging, 92310 Sèvres (FR)
(72) Inventeur: PINGEOT, Gilles, F-78150 Le Chesnay (FR)
(74) Mandataire: Le Forestier, Eric
(86) Numéro de dépôt international: PCT/EP2008/056640
(87) Numéro de publication internationale: WO 2008/145706

(56) Documents cités:
- WO-A-2005/106828
- US-B1- 6 286 873

## Description

La présente invention concerne d'une façon générale les techniques d'affichage.

Elle concerne en particulier les panneaux d'affichage et leurs procédés de fabrication, mettant en oeuvre la technologie dite "à barrière de parallaxe".

On connaît déjà de tels types de panneaux d'affichage, et en particulier un panneau comprenant une plaque avant comportant des zones opaques et des zones transparentes alternées, une plaque arrière comportant une pluralité de motifs visibles par transparence et organisés selon un agencement correspondant à celui des zones transparentes de l'autre plaque, lesdites plaques étant séparées par un milieu transparent, de telle sorte que selon l'axe d'incidence de la vision sur le panneau, un observateur perçoive une parmi plusieurs images différentes lorsque de la lumière traverse le panneau à partir de l'arrière.

De tels panneaux peuvent être utilisés en particulier pour produire des images en relief ou pour restituer des animations que l'observateur peut voir en se déplaçant par rapport au panneau, perpendiculairement à la direction des stries. Ainsi les différents motifs entrelacés peuvent être des vues d'une même scène selon différents points d'observation, pour restituer une impression de relief de la scène lorsque l'utilisateur se déplace.

Le document WO 2005/106828 A donne un exemple d'un tel panneau.

L'homme du métier s'attend, en particulier lorsque les zones transparentes de la plaque avant sont resserrées, avec en corollaire un entrelacement fin des motifs de la plaque arrière, à ce que toute imperfection dans le pas, l'agencement et/ou la géométrie des zones transparentes par rapport au pas, à l'agencement et/ou à la géométrie des motifs affecte irrémédiablement la qualité de l'effet visuel du relief et/ou de l'animation.

Toutefois, la Demanderesse a observé de façon tout à fait inattendue que, même en présence de telles imperfections, l'oeil humain était capable d'effectuer les corrections permettant malgré tout de restituer un effet de relief et/ou d'animation satisfaisant, tout particulièrement pour des panneaux d'affichage de grandes dimensions (par exemple de l'ordre de 1 à plusieurs m²) observés de loin.

L'invention vise ainsi à considérablement simplifier la réalisation de tels panneaux d'affichage.

A cet effet, l'invention propose un panneau du type défini plus haut, caractérisé en ce que la plaque avant et la plaque arrière sont réalisées sous forme de feuilles souples avant et arrière espacées, maintenues essentiellement par des régions de bords dans une relation de parallélisme ou de quasi-parallélisme mutuel, et en ce que les zones opaques de la feuille avant et les motifs de la feuille arrière sont réalisés par impression à la machine, en ce qu'il comprend un dispositif enrouleur pour la feuille arrière et un dispositif enrouleur pour la feuille avant, et en ce que la feuille avant et la feuille arrière sont maintenues par des moyens de mise en tension.

Certains aspects préférés mais non limitatifs de ce panneau, tels que définis dans les revendications 2-11, sont les suivants :
* la feuille avant et la feuille arrière sont réalisées dans un même matériau.
* la feuille avant et la feuille arrière sont maintenues par des moyens de mise en tension.
* le panneau comprend en outre un dispositif d'entraînement d'au moins l'une des feuilles pour faire varier le rendu visuel.
* la feuille arrière est assujettie à un dispositif d'entraînement à enrouleur et comprend une succession de régions possédant des motifs destinés à former respectivement des jeux d'images différents.
* la feuille avant est assujettie à un dispositif d'entraînement à enrouleur.
* la feuille avant comprend au moins deux régions pourvues respectivement de zones opaques et transparentes ayant des paramètres différents.
* les paramètres différents sont des pas et/ou des dimensions de zones et/ou des orientations différents.
* la feuille avant comprend au moins une région pourvue de zones opaques et transparentes et une région entièrement transparente.
* le panneau comprend en outre entre les feuilles avant et arrière une feuille intermédiaire possédant une impression visible par rétroéclairage.
* ladite impression forme également une pluralité de motifs visibles par transparence et organisés selon un agencement correspondant à celui des zones de la feuille avant, de telle sorte que selon l'axe d'incidence de la vision sur le panneau, un observateur perçoive une parmi plusieurs des images différentes au niveau de ladite surface intermédiaire.
* les enrouleurs des feuilles avant et arrière sont agencés avec leurs axes perpendiculaires entre eux, formant ensemble essentiellement un rectangle.
* le panneau comprend en outre des moyens de réglage de la distance entre les feuilles avant et arrière.
* la lumière traversant le panneau à partir de l'arrière est engendrée par un dispositif de rétroéclairage pouvant être commandé, les enrouleurs de la feuille avant et de la feuille arrière peuvent être commandés, et le panneau comprend en outre une unité de commande pour commander l'allumage/extinction du dispositif de rétroéclairage et les enrouleurs de façon prédéterminée et/ou en fonction d'évènements extérieurs détectés.
* la feuille avant présente en outre sur sa surface extérieure, au niveau des zones opaques, une image.

On propose également un procédé de fabrication d'un panneau d'affichage selon la revendication 1, ledit procédé faisant intervenir une lame d'un milieu essentiellement transparent à la lumière, comprenant les étapes suivantes :
(a) former par impression avec une machine sur une première feuille dite feuille avant, un motif de zones opaques et de zones transparentes,
(b) former par impression avec une machine sur une deuxième feuille dite feuille arrière, une pluralité de motifs visibles par transparence et organisés selon un agencement correspondant à celui des zones transparentes, de telle sorte que selon l'axe d'incidence de la vision, un observateur perçoive une parmi plusieurs des images différentes lorsqu'une lumière traverse le panneau à partir de l'arrière.

Certains aspects préférés mais non limitatifs de ce procédé sont les suivants :
* on choisit un pas pour les zones de la surface avant qui est un multiple entier d'un pas d'impression de la machine.
* la feuille avant est transparente.
* la feuille arrière est translucide.
* les feuilles sont réalisées à partir d'un même matériau synthétique, de préférence du polyester.
* la feuille avant est en matière synthétique et la feuille arrière est en papier fort.

D'autres caractéristiques, buts et avantages de la présente invention apparaîtront mieux dans la description qui va suivre, faite au regard des dessins annexés sur lesquels :
- la figure 1 illustre le principe optique d'un panneau d'affichage ,
- la figure 2 présente une vue générale d'un panneau d'affichage ,
- la figure 3 est vue en coupe d'une variante du panneau d'affichage de la figure 2,
- les figures 4a à 4c illustrent une forme de réalisation du panneau d'affichage selon l'invention, et
- la figure 5 présente une vue générale d'un panneau d'affichage selon une variante deréalisation.

Plusieurs formes de réalisation d'un panneau d'affichage selon l'invention, ainsi que leur procédé de fabrication, vont être décrites dans la suite.

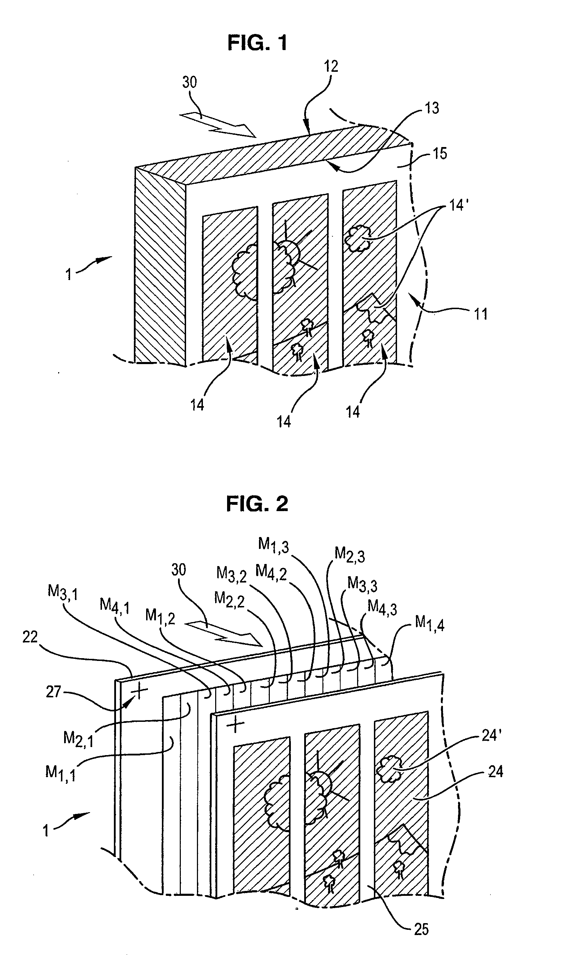

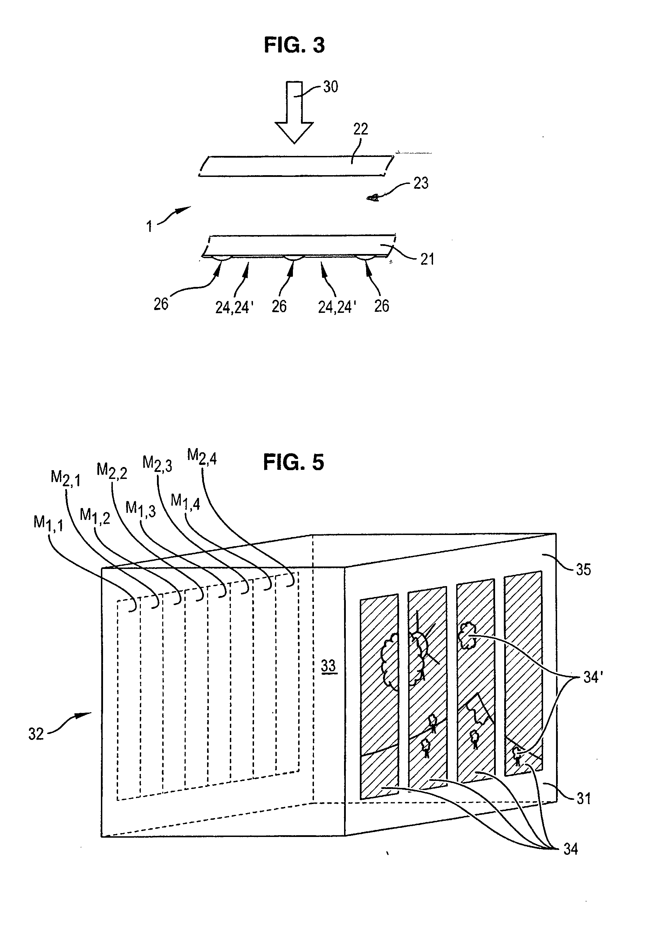

En référence tout d'abord à la figure 1 et en référence également aux figures 2 et 3, un panneau d'affichage 1 possède une lame d'un milieu essentiellement transparent à la lumière (air, PMMA, verre, etc).

D'un côté 11 de la lame 13, dit côté avant, tourné vers l'observateur, il est prévu un motif de zones opaques 14 et de zones transparentes 15. Le motif peut être un ensemble de stries répétées dans une direction, de préférence la direction verticale, ou encore des formes géométriques se répétant dans deux directions orthogonales, telles que des disques, des ellipses, des carrés, etc. Les formes géométriques peuvent aussi bien être alignées sur une même ligne que placées de manière décalée par rapport à une direction générale.

Le côté arrière 12 de la lame 13, opposé, comprend une pluralité de motifs Mᵢⱼ, tels que ceux illustrés sur la figure 2, visibles par transparence à travers la lame 13 et les zones transparentes 15.

Ces motifs définissent une pluralité d'images et sont entrelacés selon un agencement correspondant à celui des zones transparentes 15. Ainsi, selon l'axe d'incidence de la vision sur le panneau 1, l'observateur perçoit l'ensemble des motifs correspondant à une parmi plusieurs des images différentes lorsqu'une lumière 30 traverse le panneau 1 à partir de l'arrière.

Les différents motifs entrelacés peuvent être des vues d'une même scène selon différents points d'observation, pour restituer une impression de relief de la scène lorsque l'utilisateur se déplace, perpendiculairement aux stries, devant le panneau, ou encore une série d'images différentes.

Dans le présent exemple, il existe quatre images (i varie de 1 à 4) dont les motifs M_{1,j} à M_{4,j}, de nombre chacun égal au nombre de zones transparentes 15, sont entrelacés. L'homme du métier saura multiplier le nombre d'images en fonction des paramètres physiques et optiques liés en particulier au mode de fabrication.

Dans une forme de réalisation, le côté avant 11 présente une image 14' au niveau de la face des zones opaques 14 tournée vers l'observateur. Cette image 14' peut, selon les modes de réalisation, être imprimée sur tout ou partie des zones opaques 14, et peut éventuellement déborder partiellement sur les zones transparentes 15, celles-ci étant alors partiellement teintées.

Ainsi, lorsqu'il n'y a aucune lumière provenant de l'arrière, ou lorsque celle-ci est insuffisante pour distinguer les motifs Mᵢⱼ, l'observateur peut tout de même observer cette image 14' en deux dimensions.

Ceci est particulièrement avantageux soit lorsque le panneau d'affichage est utilisé sur ou en intégrant une vitre donnant sur l'extérieur d'un bâtiment (le rétroéclairage étant assuré par la lumière diurne), auquel cas une image peut être observée même lorsqu'il fait nuit, soit lorsque la lumière arrière provient d'un dispositif de rétroéclairage et que celui-ci n'est pas en service.

L'image 14' imprimée peut être généralement identique ou semblable aux motifs du côté arrière 12, ou complètement différente.

Afin d'obtenir des panneaux d'affichage 1 donnant à l'observateur des images en relief et animations d'une qualité visuelle optimale, les zones 14, 15 du côté avant et les motifs Mᵢⱼ du côté arrière devraient normalement présenter un pas, un agencement et une géométrie en étroite correspondance les uns avec les autres.

Toutefois, la Demanderesse a constaté de façon tout à fait inattendue que, même si cette étroite correspondance n'était pas respectée, l'oeil humain était capable d'effectuer les corrections permettant malgré tout de restituer un effet de relief et/ou d'animation satisfaisant, tout particulièrement pour des panneaux d'affichage de grandes dimensions (par exemple de l'ordre de 1 à plusieurs m²) observés de loin.

De là, et en référence aux figures 2 et 3, il est apparu que les côtés avant 11 et arrière 12 peuvent être constitués par deux feuilles souples transparentes en matière synthétique (de préférence en polyester), respectivement 21 et 22, séparées par une simple lame d'air et imprimées par exemple avec une imprimante numérique à jets d'encre, pour former respectivement les zones opaques sur la feuille avant et les motifs Mᵢⱼ sur la feuille arrière (tels qu'ils puissent être traversés par une lumière provenant de l'arrière). Et il suffit que les feuilles soient maintenues par leurs bords sous une certaine tension, dans une relation de parallélisme ou de quasi-parallélisme, pour que l'effet recherché soit obtenu.

Sur les figures 2 et 3, les références sont augmentées de 10 par rapport a celles de la figure 1.

De préférence, on choisit pour les zones opaques de la feuille avant, et le cas échéant pour les motifs de la feuille arrière, un pas qui est un multiple du pas d'impression de la machine. On garantit ainsi une bonne correspondance absolue entre leur pas et leur agencement.

De préférence, l'impression des zones opaques 24 et le cas échéant de l'image 24' sur la feuille avant 21 est réalisée en deux étapes. Au cours d'une première étape, on applique une encre opacifiante sur les zones destinées à former les zones opaques 24. Puis, au cours d'une deuxième étape, on imprime par dessus l'image 24'. Mais le cas échéant, les deux étapes sont réalisées simultanément.

Optionnellement, les zones transparentes 25 sont pourvues, lors du passage dans la machine d'impression et simultanément ou successivement à l'impression des zones opaques 24 et/ou de l'image 24', d'une couche de vernis transparent appliquée également par la machine.

Alternativement, on peut appliquer un masque sur la surface extérieure de la feuille avant 21, puis pulvériser un vernis et retirer le masque.

Comme illustré sur la figure 3, les phénomènes de capillarité entre le matériau de la lame feuille 21 et le vernis donnent à celui-ci la forme d'une lentille (ici une lentille cylindrique). Ceci permet, par l'effet d'agrandissement optique obtenu, de prévoir sur la feuille arrière 22 des motifs M_{i,j} sensiblement plus étroits que la largeur des zones transparente 15, et donc plus nombreux.

L'impression visuelle lorsque l'observateur se déplace devant le panneau peut ainsi être améliorée (passage plus progressif d'une image à l'autre).

Selon un autre aspect, la feuille avant 21 et la feuille arrière 22 sont avantageusement réalisées dans un même matériau, afin qu'elles évoluent de manière similaire dans le temps, et que, le cas échéant, leurs caractéristiques géométriques varient avec la température, l'humidité, etc. de manière identique ou tout au moins similaire.

La feuille avant 21 est de préférence en polyester transparent.

La feuille arrière 22 est de préférence en polyester translucide, de manière à assurer une diffusion de la lumière arrivant par l'arrière.

On peut également utiliser pour la feuille arrière par exemple un papier translucide de résistance mécanique appropriée.

On peut également prévoir que la feuille avant 21 et la feuille arrière 22 soient imprimées à la suite l'une de l'autre, sur la même imprimante, pour que la correspondance des pas des zones transparentes de la feuille avant et des motifs de la feuille arrière soit renforcée.

Selon une autre caractéristique avantageuse, on prévoit sur les feuilles 21, 22 des repères d'alignement 27 qui facilitent leur bon positionnement relatif. Ces repères 27 peuvent être imprimés et comprendre des figures identifiables telles que des traits et/ou dessins dans la marge, ou être des moyens de positionnement physiques, comme par exemple une ou plusieurs butées mécaniques, ou encore un ensemble formé par une encoche pratiquée dans chaque feuille, correspondant à une saillie présente sur la lame du panneau ou sur un support marginal, etc.

Par ailleurs, le panneau peut comprendre différents agencements pour tendre les feuilles 21 et 22 de manière à assurer entre elles au moins un quasi-parallélisme en définissant entre elles une lame d'air 23 d'épaisseur essentiellement constante.

Le cas échéant, on prévoit des moyens d'ajustement permettant de faire varier la distance entre les feuilles 21 et 22 et d'ajuster ou de modifier, selon le résultat voulu, la profondeur et le relief de l'image tridimensionnelle obtenue. Ces moyens d'ajustement conservent le parallélisme des feuilles 21, 22, afin que la restitution d'un effet visuel soit préservée.

Ainsi, les feuilles 21 et 22 peuvent par exemple être tendues au moyen d'un support marginal (comme un cadre, ou deux tiges parallèles opposées s'étendant le long de deux côtés latéraux des feuilles, ou encore les moyens d'ajustement de distance décrits plus haut), par des moyens élastiques (tels que des tendeurs coopérant avec des oeillets), ou encore par gravité (en attachant un poids au bas des feuilles 21 et 22, par exemple une barre, et en les suspendant par leur côté supérieur).

Dans le cas où le panneau 1 est destiné à être placé en extérieur sans protection, on peut ajourer les feuilles pour réduire leur prise au vent.

Selon une autre variante encore, on prévoit d'imprimer la pluralité de motifs Mᵢⱼ visibles par transparence (identiques ou différents) sur chaque face de la feuille arrière 22. Ainsi, en prévoyant de chaque côté de la feuille 22 une lame 23 d'air et une feuille avant 21, un observateur peut alors voir une image en relief ou animée quel que soit le côté d'affichage du panneau 1 devant lequel il se déplace.

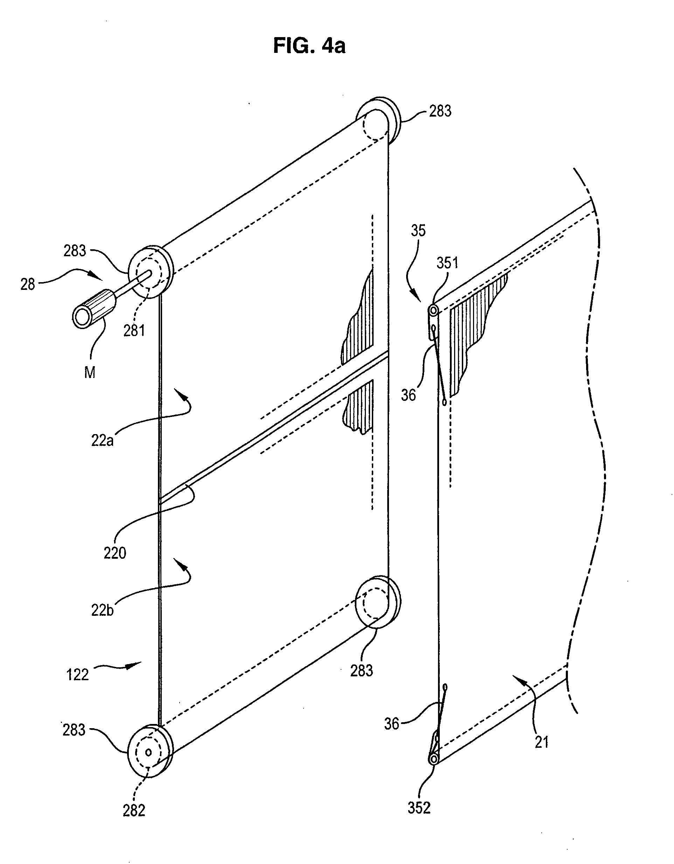

Selon une autre forme de réalisation, et maintenant en référence aux figures 4a à 4c, on prévoit que le panneau d'affichage 1 comprenne un enrouleur pour la feuille arrière et le cas échéant pour la feuille avant.

Dans cette forme de réalisation, la feuille arrière 122 est composée d'un ensemble de feuilles 22a, 22b, 22c portant des ensembles de motifs entrelacés visant à la restitution d'images distinctes. Par exemple, ces feuilles sont imprimées séparément les unes des autres et attachées ensemble par des moyens connus en eux-mêmes (par exemple des attaches à glissière complémentaires 220 formées ici le long de leurs bords supérieurs et inférieurs) pour former la feuille 122.

En variante, il peut s'agir d'une même feuille en forme de bande sur laquelle sont imprimées à la suite les unes des autres dans le sens de la bande plusieurs ensembles de motifs correspondant à différentes images.

Cet ensemble de feuilles assemblées ou cette feuille unique peut être mû par un dispositif enrouleur 28 comportant deux mandrins espacés 281, 282 définissant entre eux un espace d'affichage et dont au moins l'un est entrainé par un moteur M, l'autre étant freiné de façon appropriée pour maintenir la feuille sous une tension adéquate. De préférence, des flasques 283 prévus aux extrémités des mandrins permettent d'assurer un guidage de la feuille 122 de manière à conserver une orientation satisfaisante des motifs entrelacés destinés à former les différentes images tridimensionnelles.

Le moteur M est commandé selon une temporisation et une vitesse de défilement souhaitées.

Cette réalisation est particulièrement appropriée pour des dispositifs d'affichage reçus dans un caisson 50 fermé par une vitre frontale 51 et abritant également un dispositif de rétroéclairage 30 par exemple à tubes néon.

Dans la forme de réalisation de la figure 4a, la feuille avant 21 est tendue sur un cadre 35 comprenant une barre supérieure 351 et une barre inférieure 352 reliées entre elles par des montants latéraux (non représentés), cette tension étant assurée par exemple à l'aide de liens élastiques ou tendeurs 36 coopérant avec des oeillets pratiqués dans les régions marginales de la feuille 21. En variante, la feuille avant 21 peut être collée sur la vitre 51 du caisson, de préférence sur sa face intérieure, ou l'impression peut être réalisée directement sur cette vitre avec une machine d'impression à plat.

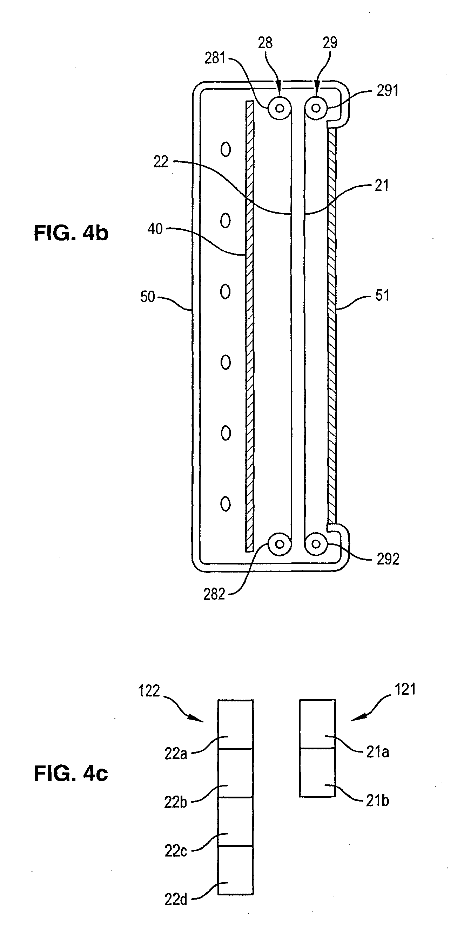

Dans la forme de réalisation des figures 4b et 4c, la feuille avant, désignée dans son ensemble par la référence 121, est constituée par l'assemblage d'une feuille 21 a pourvue des zones opaques et transparentes alternées 24, 25 et d'une feuille 21 b de préférence entièrement transparente. Les deux feuilles peuvent être réalisées d'un seul tenant ou assemblées de la même manière que la feuille 122.

Cette feuille 121 est montée sur un second dispositif enrouleur 29 comprenant ici encore deux mandrins espacés 291, 292 commandés soit par un moteur distinct (non représenté), soit par le moteur M précité via une transmission appropriée, selon une vitesse de défilement et une temporisation propres.

On notera ici que, pour limiter l'encombrement du panneau dans le sens de son épaisseur, on peut prévoir que les mandrins 281, 282 d'une part, et 291, 292 d'autre part soient orientés perpendiculairement les uns aux autres, sans zone de recouvrement, de manière à faire défiler les feuilles 122, 121 sans deux directions perpendiculaires. Par exemple, les mandrins 281, 282 sont dans des régions supérieure et inférieure du caisson 50, et les mandrins 291, 292 sont dans des régions latérales opposées du caisson. Les paires de mandrins peuvent également être parallèles entre elles.

Avec la feuille avant 121 précitée, la feuille arrière 122 comprend avantageusement d'une part des images formées de motifs entrelacés destinés à assurer une perception tridimensionnelle ou animée à travers la feuille 21 a formant barrière de parallaxe, et d'autre part des images standard destinées à être observées sans impression de relief à travers la feuille 21 b entièrement transparente.

Ainsi, un observateur pourra, selon le mode d'affichage choisi :
- observer une image en relief ou animée, ou une séquence de telles images, lorsque la feuille 21 a occupe l'espace situé entre les mandrins 291, 292, et lorsque les feuilles 22a, 22b à motifs entrelacés sont successivement amenées dans l'espace d'affichage, le rétro-éclairage étant en marche, ou
- observer une image bidimensionnelle ou une succession d'images bidimensionnelles lorsque la feuille transparente 21 b occupe l'espace situé entre les mandrins 291, 292 et lorsque des feuilles par exemple 22c, 22d comportant des images bidimensionnelles sont successivement amenées dans l'espace d'affichage, typiquement en l'absence de rétro-éclairage mais également le cas échéant lorsque celui-ci est allumé.

Toute combinaison ou alternance entre images bidimensionnelles et images tridimensionnelles est également possible.

De même, toute séquence de commande du ou des moteurs des dispositifs enrouleurs et du dispositif de rétroéclairage, à l'aide d'une unité de commande appropriée, peut être envisagée. Un détecteur de lumière ou d'obscurité ambiante peut également influencer le comportement de cette unité de commande.

Selon une autre variante du panneau pourvu d'un dispositif enrouleur pour la feuille arrière, on peut prévoir que les motifs de la feuille arrière 22 se répètent dans une direction parallèle à la direction de défilement de la feuille (par exemple, des barres de parallaxe verticales, et un défilement horizontal de l'image grâce à des rouleaux de défilement 28 verticaux). On obtient ainsi une image tridimensionnelle qui évolue dans le temps et qui donne à un observateur une impression de mouvement des éléments la constituant, et réaliser ainsi un véritable film d'animation en relief en particulier si des motifs entrelacés correspondant à un très grand nombre d'images successives sont formés sur la feuille arrière et si celle-ci défile, continûment ou par pas.

Une autre variante de la présente invention consiste à prévoir, entre la feuille avant et la feuille arrière, une ou plusieurs feuilles intermédiaires s'étendant parallèlement à celles-ci. Dans une forme de réalisation de base, cette feuille comprend un ou plusieurs images, dessins, etc. fixes et semi-transparents (pour pouvoir être visibles à l'aide du rétroéclairage tout en cachant les motifs entrelacés situés derrière), sur un fond généralement transparent qui permet à la feuille avant et à la feuille arrière de coopérer normalement comme décrit plus haut. Alternativement, le ou les images, dessins, etc. prévus sur la ou les feuilles intermédiaires peuvent être réalisés également par entrelacement de motifs de la même manière que sur la feuille arrière. Ici encore, une semi-transparence au niveau de ces motifs permet de bénéficier du rétroéclairage tout en cachant la partie de la feuille arrière située derrière. Dans ce cas, le déplacement de l'observateur devant le panneau peut produire par exemple une impression de relief à partir des images créées par les motifs de la feuille arrière, et une animation des dessins, images, etc. créés à partir des motifs de la feuille intermédiaire.

Plusieurs feuilles intermédiaires avec chacune un ou plusieurs dessins ou images différents peuvent être utilisées.

En outre, comme dans la forme de réalisation précédente, on peut prévoir un mouvement séquencé de la feuille avant et/ou de la feuille arrière et/ou de la ou des feuilles intermédiaires.

Selon une variante du dispositif de rétroéclairage, celui-ci peut comprendre une plaque électroluminescente 31 fixée par exemple par collage, contre la surface extérieure de la feuille arrière lorsque cette dernière est fixe. (En variante et toujours dans cette hypothèse, les motifs de la feuille arrière peuvent être imprimés directement sur cette plaque).

Un tel mode de réalisation donne un rendu visuel excellent. En outre, une telle plaque électroluminescente est mince (typiquement de l'ordre de 1 à quelques mm), légère et flexible, ce qui permet d'étendre significativement les possibilités de mise en oeuvre de la présente invention.

En outre, il est facile avec cette technologie de faire varier l'intensité du rétroéclairage à l'aide d'un moyen de commande approprié, éventuellement sensible à la luminosité ambiante.

Dans une autre forme de réalisation, illustrée sur la figure 5, les feuilles avant et arrière définissent deux faces opposées et sensiblement parallèles d'une boîte, notamment en forme de parallélépipède rectangle.

Plusieurs paires de faces opposées de la boîte, parallèles entre elles, peuvent ainsi constituer des feuilles avant et arrière d'un panneau d'affichage au sens de la présente invention. Sur cette figure, les références sont simplement augmentées de 20 par rapport à celles de la figure 1.

Selon une autre forme de réalisation, la lame 23 peut constituer un support rigide pour les feuilles avant et arrière, en étant constituée notamment d'une vitre, dun double vitrage, d'une plaque de PMMA, etc.

Dans ce cas, les feuilles 21 et 22 peuvent être réalisées dans un matériau présentant des caractéristiques d'adhérence par apport d'un adhésif, par effet électrostatique, etc. ou autre technique disponible dans le commerce.

Grâce à cette adhérence, les feuilles 21 et 22 sont en contact avec la lame 23 sur toute la surface de leur surface intérieure, ce qui garantit leur maintien dans la relation optique souhaitée l'une par rapport à l'autre.

Cette forme de réalisation du panneau permet de réaliser très facilement un panneau à partir de deux feuilles assorties posées en vis-à-vis de part et d'autre d'une plaque transparente préexistante telle qu'un vitrage de bâtiment. Durant la journée, le rétroéclairage est assuré par la lumière diurne. Lorsqu'il fait nuit, l'image imprimée côté observateur devient visible dès lors que la pièce est éclairée.

Bien entendu, l'homme du métier saura apporter à l'invention de nombreuses variantes et modifications, (telles que définies dans les revendications ci-dessous).

## Revendications

1. Panneau pour affichage d'images en relief/et ou animées, comprenant une plaque avant (13 ; 23 ; 33) comportant des zones opaques (14 ; 24 ; 34) et des zones transparentes (15 ; 25 ; 35) alternées, une plaque arrière comportant une pluralité de motifs (M_{i,j}) visibles par transparence et organisés selon un agencement correspondant à celui des zones transparentes de l'autre plaque, lesdites plaques étant séparées par un milieu transparent, de telle sorte que selon l'axe d'incidence de la vision sur le panneau (1), un observateur perçoive une parmi plusieurs images différentes lorsque de la lumière (30) traverse le panneau (1) à partir de l'arriére, panneau **caractérisé en ce que** la plaque avant et la plaque arrière sont réalisées sous forme de feuilles souples avant (21) et arrière (22) espacées (23), maintenues essentiellement par des régions de bords dans une relation de parallélisme ou de quasi-parallélisme mutuel, **en ce que** les zones opaques de la feuille avant et les motifs de la feuille arrière sont réalisés par impression à la machine, **en ce qu'**il comprend un dispositif enrouleur (28) pour la feuille arrière (22) et un dispositif enrouleur (29) pour la feuille avant (21), et **en ce que** la feuille avant (21) et la feuille arrière (22) sont maintenues par des moyens de mise en tension.

2. Panneau selon la revendication 1 comprenant en outre un dispositif d'entraînement d'au moins l'une des feuilles pour faire varier le rendu visuel.

3. Panneau selon l'une des revendications 1 et 2, dans lequel la feuille arrière est assujettie à un dispositif d'entraînement à enrouleur et comprend une succession de régions possédant des motifs destinés à former respectivement des jeux d'images différents.

4. Panneau selon l'une des revendications 1 à 3, dans lequel la feuille avant comprend au moins deux régions pourvues respectivement de zones opaques et transparentes ayant des paramètres différents.

5. Panneau selon l'une des revendications 1 à 4, dans lequel la feuille avant comprend au moins une région pourvue de zones opaques et transparentes et une région entièrement transparente, et dans lequel la feuille avant est assujettie à un dispositif d'entraînement à enrouleur.

6. Panneau selon l'une des revendications 1 à 5, comprenant en outre entre les feuilles avant et arrière une feuille intermédiaire possédant une impression visible par rétroéclairage.

7. Panneau selon la revendication 6, dans lequel ladite impression forme également une pluralité de motifs (M_{i,j}) visibles par transparence et organisés selon un agencement correspondant à celui des zones transparentes de la feuille avant, de telle sorte que selon l'axe d'incidence de la vision sur le panneau (1), un observateur perçoive une parmi plusieurs des images différentes au niveau de ladite surface intermédiaire.

8. Panneau selon l'une des revendications 3 à 7 prises en combinaison, dans lequel la feuille avant est assujettie à un dispositif d'entraînement à enrouleur, et dans lequel les enrouleurs des feuilles avant et arrière sont agencés avec leurs axes perpendiculaires entre eux, formant ensemble essentiellement un rectangle.

9. Panneau selon l'une des revendications 1 à 8, comprenant en outre des moyens de réglage de la distance entre les feuilles avant et arrière.

10. Panneau selon la revendication 8, dans lequel la lumière traversant le panneau à partir de l'arrière est engendrée par un dispositif de rétroéclairage pouvant être commandé, dans lequel les enrouleurs da la feuille avant et de la feuille arrière peuvent être commandés, et comprenant en outre une unité de commande pour commander l'allumage/extinction du dispositif de rétroéclairage et les enrouleurs de façon prédéterminée et/ou en fonction d'évènements extérieurs détectés.

11. Panneau selon l'une des revendications 1 a 10, dans lequel la feuille avant (21) présente en outre sur sa surface extérieur, au niveau des zones opaques (24), une image (24').

12. Procédé de fabrication d'un panneau d'affichage selon la revendication 1, ledit procédé faisant intervenir une lame d'un milieu essentiellement transparent à la lumière, comprenant les étapes suivantes :
(a) former par impression avec une machine sur une première feuille, dite feuille avant, un motif de zones opaques et de zones transparentes,
(b) former par impression avec une machine sur une deuxième feuille, dite feuille arrière, une pluralité de motifs visibles par transparence et organisés selon un agencement correspondant à celui des zones transparentes, de telle sorte que selon l'axe d'incidence de la vision un observateur perçoive une parmi plusieurs des images différentes lorsqu'une lumière traverse le panneau à partir de l'arrière.

13. Procédé selon la revendication 12, dans lequel pour les zones de surface avant, un pas est choisi qui est un multiple entier d'un pas d'impression de la machine.

14. Procédé selon la revendication 12 ou 13, dans lequel la feuille avant est transparente.

15. Procédé selon l'une des revendications 12 à 14, dans lequel la feuille arrière est translucide.

## Patentansprüche

1. Tafel zur Anzeige von räumlichen und/oder von animierten Bildern, mit einer vorderen Platte (13; 23; 33) mit alternierenden lichtundurchlässigen Bereichen (14; 24; 34) und durchsichtigen Bereichen (15; 25; 35), einer hinteren Platte mit einer Vielzahl von Bildmotiven (M_{i,j}), die gegen das Licht sichtbar und gemäß einer Anordnung, die derjenigen der durchsichtigen Bereiche der anderen Platte entspricht, angeordnet sind, wobei die Platten durch ein durchsichtiges Mittel getrennt sind, derart dass abhängig von der Blickrichtungsachse auf die Tafel (1) ein Beobachter eines von einer Vielzahl unterschiedlicher Bilder wahrnimmt, wenn Licht (30) von hinten durch die Tafel (1) tritt, wobei die Tafel **dadurch gekennzeichnet ist, dass** die vordere Platte und die hintere Platte als beabstandete (23) vordere (21) und hintere (22) biegsame bzw. flexible Folien ausgebildet sind, die im wesentlichen durch Randregionen in einem Verhältnis der Parallelität oder wechselseitigen Quasi-Parallelität gehalten werden, dass die lichtundurchlässigen Bereiche der vorderen Folie und die Bildmotive der hinteren Folie durch maschinelles Bedrucken hergestellt sind, dass sie eine Aufrollvorrichtung (28) für die hintere Folie (22) und eine Aufrollvorrichtung (29) für die vordere Folie (21) umfasst und dass die vordere Folie (21) und die hintere Folie (22) durch Spannungserzeugungsmittel gehalten sind.

2. Tafel nach Anspruch 1, die des weiteren eine Mitnehmereinrichtung zum Mitnehmen mindestens einer der Folien zur Änderung der visuellen Wiedergabe umfasst.

3. Tafel nach einem der Ansprüche 1 und 2, in der die hintere Folie an einer Aufroll-Mitnehmereinrichtung befestigt ist und eine Abfolge von Regionen umfasst, die Bildmotive aufweisen, die dazu vorgesehen sind, jeweils unterschiedliche Sätze von Bildern zu erzeugen.

4. Tafel nach einem der Ansprüche 1 bis 3, in der die vordere Folie mindestens zwei Regionen ohne lichtundurchlässige und durchsichtige Bereiche umfasst, die unterschiedliche bzw. andere Parameter haben.

5. Tafel nach einem der Ansprüche 1 bis 4, in der die vordere Folie mindestens eine Region ohne lichtundurchlässige und durchsichtige Bereiche und eine vollständig durchsichtige Region umfasst, und in der die vordere Folie an einer Aufroll-Mitnehmereinrichtung befestigt ist.

6. Tafel nach einem der Ansprüche 1 bis 5, die des weiteren zwischen der vorderen und der hinteren Folie eine Zwischenfolie mit bei Rückbeleuchtung sichtbarer Bedruckung aufweist.

7. Tafel nach Anspruch 6, in der die Bedruckung ebenfalls eine Vielzahl von Bildmotiven (M_{i,j}) bildet, die gegen das Licht sichtbar und gemäß einer Anordnung, die derjenigen der durchsichtigen Bereiche der vorderen Folie entspricht, angeordnet sind, derart dass abhängig von der Blickrichtungsachse auf die Tafel (1) ein Beobachter eines von einer Vielzahl der unterschiedlichen Bilder auf der Ebene der Zwischenfolie wahrnimmt.

8. Tafel nach einem der Ansprüche 3 bis 7 in Kombination, in der die vordere Folie an einer Aufroll-Mitnehmereinrichtung befestigt ist, und in der die Aufrollvorrichtungen der vorderen und der hinteren Folie mit ihren Achsen senkrecht zueinander angeordnet sind und gemeinsam im wesentlichen ein Rechteck bilden.

9. Tafel nach einem der Ansprüche 1 bis 8, die des weiteren Mittel zur Einstellung des Abstandes zwischen der vorderen Folie und der hinteren Folie umfasst.

10. Tafel nach Anspruch 8, in der das von hinten durch die Tafel tretende Licht von einer steuerbaren Hinterleuchtungsvorrichtung erzeugt wird, in der die Aufrollvorrichtungen der vorderen Folie und der hinteren Folien steuerbar sind und die des weiteren eine Steuereinheit zum Steuern des Einschaltens/Ausschaltens der Hinterleuchtungsvorrichtung und der Aufrollvorrichtungen auf vorbestimmte Weise und/oder als Funktion detektierter äußerer Ereignisse umfasst.

11. Tafel nach einem der Ansprüche 1 bis 10, in der die vordere Folie (21) des weiteren auf ihrer Außenfläche auf der Höhe der lichtundurchlässigen Bereiche (24) ein Bild (24') aufweist.

12. Verfahren zur Herstellung einer Anzeigetafel gemäß Anspruch 1, wobei das Verfahren eine Lamelle aus einem im wesentlichen durchsichtigen Material einführt, mit den folgenden Schritten:
a) Ausbilden eines Bildmotivs aus lichtundurchlässigen Bereichen und durchsichtigen Bereichen durch Drucken mit einer Maschine auf einer ersten Folie, nämlich der vorderen Folie,
b) Ausbilden einer Vielzahl von gegen das Licht sichtbaren und gemäß einer Anordnung, die derjenigen der durchsichtigen Bereiche entspricht, durch Drucken mit einer Maschine auf einer zweiten Folie, nämlich der hinteren Folie, angeordneten Bildmotive, derart dass abhängig von der Blickrichtungsachse ein Beobachter eines der Vielzahl unterschiedlicher Bilder wahrnimmt, wenn Licht von hinten durch die Tafel tritt.

13. Verfahren nach Anspruch 12, in dem für die Bereiche der Vorderseite ein Abstand bzw. eine Distanz gewählt wird, der ein ganzzahliges Vielfaches eines Druckabstandes bzw. einer Druckdistanz der Maschine ist.

14. Verfahren nach Anspruch 12 oder 13, in dem die vordere Folie durchsichtig ist.

15. Verfahren nach einem der Ansprüche 12 bis 14, in dem die hintere Folie durchscheinend ist.

## Claims

1. A panel for displaying 3D and/or animated images, comprising a front plate (13; 23; 33) having alternate opaque zones (14; 24; 34) and transparent zones (15; 25; 35), a rear plate having a plurality of patterns (Mi,j) visible by transparency and organized as an arrangement corresponding to the one of the transparent zones of the other plate, said plates being separated by a transparent medium, such that depending on the vision incident axis on the panel (1), a viewer perceives one among a plurality of different images as light (30) travels through the panel (1) from the rear, the panel being **characterized in that** the front plate and the rear plate are made of spaced (23) front (21) and rear (22) flexible sheets, maintained essentially at edge regions in a parallel or quasi-parallel relationship, **in that** the opaque zones of the front sheet and the patterns of the rear sheet are made by machine printing, **in that** it comprises a winding device (28) for the rear sheet (22) and a winding device (29) for the front sheet (21), and **in that** the front sheet (21) and the rear sheet (22) are maintained by tensioning means.

2. A panel according to claim 1, further comprising a device for driving at least one of the sheets for varying the visual rendering.

3. A panel according to one of claims 1 and 2, wherein the rear sheet is subjected to a winding driving device and comprises a succession of regions having patterns intended to respectively form different image sets.

4. A panel according to one of claims 1 to 3, wherein the front sheet comprises at least two regions respectively provided with opaque and transparent zones having different parameters.

5. A panel according to one of claims 1 to 4, wherein the front sheet comprises at least one region provided with opaque and transparent zones and one fully transparent region, and wherein the front sheet is subjected to a winding driving device.

6. A panel according to one of claims 1 to 5, further comprising, between the front and rear sheets, an intermediate sheet having a printing which is visible under back-lighting conditions.

7. A panel according to claim 6, wherein said printing also forms a plurality of patterns (Mi,j) visible by transparency and organized as an arrangement corresponding to the one of the transparent zones of the front sheet, such that, depending on the vision incident axis on the panel (1), a viewer perceives one among a plurality of different images at said intermediate surface.

8. A panel according to one of claims 3 to 7 taken in combination, wherein the front sheet is subjected to a winding driving device, and wherein the winding devices for the front and rear sheets are arranged with their axes mutually perpendicular, essentially forming together a rectangle.

9. A panel according to one of claims 1 to 8, further comprising means for adjusting the distance between the front and rear sheets.

10. A panel according to claim 8, wherein the light travelling through the panel from the rear is generated by a controllable back-lighting device, wherein the winding devices for the front sheet and the rear sheet can be controlled, and further comprising a control unit for controlling the on/off state of the back-lighting device and the winding devices in a predetermined manner of in response to detected external conditions.

11. A panel according to one of claims 1 to 10, wherein the front sheet (21) further has, on its outside surface an image (24') at said opaque zones (24).

12. A method for manufacturing a display panel according to claim 1, said method involving a lamina of n essentially light-transparent medium, comprising the following steps:
(a) forming by machine printing on a first, so-called front sheet, pattern of opaque zones and transparent zones,
(b) forming by machine printing on a second, so-called rear sheet, a plurality of pattern visible by transparency and organized as an arrangement corresponding to the one of the transparent zones, such that depending on the vision incident axis, a viewer perceives one among a plurality of different images when light travels through the panel from the rear.

13. A method according to claim 12, wherein for the front surface zones, a pitch is selected which is an integer multiple of a pitch of the printing machine.

14. A method according to claim 12 or 13, wherein the front sheet is transparent.

15. A method according to one of claims 12 to 14, wherein the rear sheet is translucent.
